Europäisches Patentamt

European Patent Office

Office européen des brevets

(11) Publication number: **0 483 443 A1**

## (12) EUROPEAN PATENT APPLICATION

(21) Application number: **90850362.6**

(22) Date of filing: **30.10.90**

(51) Int. Cl.5: **F16J 15/08, F02F 11/00**

(43) Date of publication of application:
**06.05.92 Bulletin 92/19**

(84) Designated Contracting States:
**DE ES FR GB IT**

(71) Applicant: **Remmerfelt, Arne**
**Vintergatan 42**
**S-541 33 Skövde(SE)**

(72) Inventor: **Remmerfelt, Arne**
**Vintergatan 42**
**S-541 33 Skövde(SE)**

(74) Representative: **Arwidi, Bengt**
**AHLPATENT AB Hemstigen 21**
**S-552 66 Jönköping(SE)**

(54) **Resilient sealing means.**

㋿ The invention is for a resilient sealing means for sealing between cylinder block and cylinder head of e.g. a combustion engine, where sealing problems arise with increasing pressure and temperature. The sealing means comprises a ring of resilient material, e.g. steel, having radial, cylindrical or conical sealing surfaces (3, 4), which form integral parts of the ring so that the surfaces are free to move with respect to each other.

The cross section of the ring comprises two diagonally displaced U-shaped profiles (1, 2), where the free shanks each has a sealing surface (3, 4), which seals against the corresponding surfaces in grooves (7, 8) in those parts (5, 6) between which sealing shall be achieved. The ring is firmly anchored by the end surfaces of the shanks (9, 10).

In another embodiment of the invention one U-shaped profile is substituted for by an L-shaped profile having a sealing surface which seals against the outer or inner periphery of a cylinder lining.

22 -
15 -

Fig.4

The present invention is for a means to obtain sealing against gas or liquid leakage between two parts, the planar surfaces of which are forced against each other. Especially the present invention is for a means to obtain sealing of the surfaces between cylinder block and cylinder head of engines working at high pressure and high temperature, e.g. combustion engines.

As a consequence of the development of modern combustion engines, especially diesel engines, towards higher efficiency and power per liter of cylinder capacity the pressure and temperature in the cylinders are increased. This brings with it major problems of sealing between cylinder block/cylinder lining and cylinder head.

Many different ways of solving the problem have been tried, among others packings, of hard or soft materials, and various shapes of the sealing surfaces. Also resilient sealing means occur.

The most common method of sealing multicylinder engines is to obtain in the production process the best possible flatness of the sealing surfaces and to press, with high bolt forces, the two against the centerlines of the cylinders perpendicular surfaces against each other with or without a packing in between.

This means that certain deformation of the surfaces may occur already due to the static forces. During running there are also the pulsating gas forces caused by the combustion pressure and forces caused by temperature variations.

After a certain time remaining shape changes or exhaustion occur in the material and as a consequence thereof leakage of gas or liquid may ocour.

Further drawbacks of the great number of big bolts and the great bolt forces are that the dimensions of the affected parts are increased which means higher weight and limits the possibilities of optimizing technical solutions for flow and combustion in the further development work.

The present invention is for a resilient sealing means and is intended as a complement to the commonly occurring planar packing. The invention comprises a resilient ring of hard material such as steel, having cylindrical or conical sealing surfaces. The centerline of the ring coincides with the centerline of the cylinder and the sealing surfaces of the ring are thus perpendicular, or conical, towards the planar sealing surface of the cylinder block. This means that the sealing surfaces of the ring and corresponding surfaces of the cylinder block and head, respectively, are minimally affected by the bolt and gas forces. Deformations, if any, are accounted for by the resilience of the ring.

The enlosed drawing shows in principle three different embodiments, where the ring has at least two sealing surfaces, one to seal against the cylinder head and one to seal against the cylinder block or, where such are used, against the cylinder lining. Each figure is a cross section through a cylinder along its axis.

Fig. 1 shows an embodiment where the ring has a U-shaped part for a groove in the cylinder head and a cylindrical part for sealing against the inside of the cylinder.

Fig. 2 shows an embodiment which is adapted to so called wet cylinder linings. The ring has a U-shaped part for a groove in the cylinder head and a cylindrical part for sealing against the outside of the cylinder lining (lining collar).

Figures 3 and 4 show additional functions of the embodiments of figures 1 and 2.

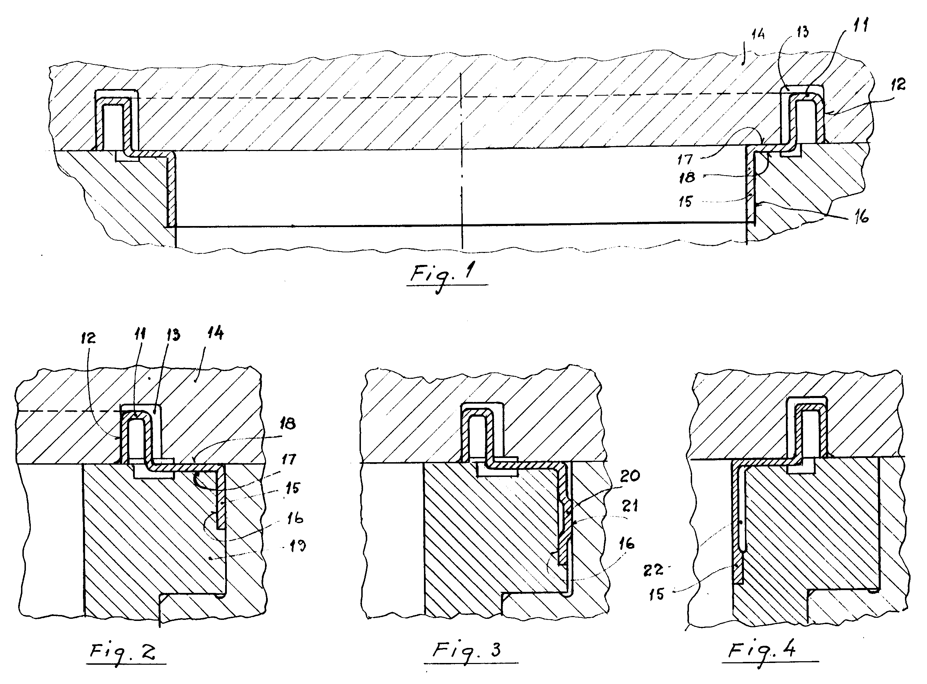

The embodiment shown in fig. 1 is so designed that the cross-section of the ring has a U-shaped part 11 with a carefully worked sealing surface on the outside 12, which is pressed into a corresponding groove 13 in the cylinder head 14.

A cylindrical part 15 of the ring, diagonally opposite the U-shaped part, is pressed into a recess in the cylinder lining or the inside of the cylinder block 19. The sealing surfaces 16 are carefully worked in order to give a fully satisfactory sealing.

The ring is so shaped that it is firmly anchored by the surfaces 17 and 18.

In fig. 4 is shown the same embodiment as in fig. 1 although so designed that a heat shield is obtained between the ring and the upper part of the cylinder wall. This embodiment is primarily intended for engines having so called wet cylinder linings. Because the heat conduction away from the upper part of the cylinder lining, the so called lining collar, is limited thereby that the cylinder is not an integrated part of the cylinder block and that there is a greater mass of goods in this part, the temperature during running is here considerably higher than in adjacent parts. This can in the long run be a drawback for the sealing arrangement around the lining. By making a larger or smaller release gap 22 between the cylindrical part of the sealing ring and the cylinder lining, the hot combustion gases are barred from direct contact with the cylinder wall.

The embodiment shown in fig. 2 is adapted for so called loose or wet cylinder linings. The sealing ring has a U-shaped part 11 having a carefully worked sealing surface on the inside 12 which is pressed into corresponding groove 13 in the cylinder head 14. A cylindrical part 15, diagonally opposite the U-shaped part is pressed into a recess in the outside of the cylinder lining 19.

Sealing surfaces against the gas pressure are beside the cylindrical part 16, also the planar surfaces 17 and 18, between which surfaces the ring is firmly enclosed.

The cross-section of the cylindrical part may be designed with a curved part 21 as shown in fig. 3, whereby besides sealing against the gas pressure also liquid sealing is obtained thereby that the ring is resiliently mounted against the steering diameter of the cylinder block or, where occuring, the corresponding free diameter in the recess for the lining collar.

In all of the embodiments it is so that the parts of ring which seal against corresponding parts of cylinder block and cylinder head, respectively, have such dimensions that within the span of temperature there is always a tight fit with sufficient tension.

In order to avoid damages of the sealing surfaces by assembly and to remove possible surface defects, the sealing means is given a treatment by phosphatising or coating with a soft metal e.g. lead, tin or zink.

When working the sealing grooves in the cylinder block and cylinder head, respectivly, great care is required to obtain good concentricity between the sealing surfaces. This holds especially for engines where one and the same cylinder head is common to several cylinders. The present invention allows for a certain excentricity within the tolerances which today are applied in this industry. Now known and used production methods are satisfactory to obtain sufficient accuracy.

All embodiments of the ring can be produced by pressing /deep drawing, be machined from tube blanks or bent from a profile into a ring the ends of which are butt welded. The resilient properties are obtained by proper selection of material and suitable heat treatment according to known technology.

## Claims

1. Resilient sealing means for sealing between at least two surfaces against each other, **characterized** by that it comprises a ring of for example steel, which at its outer periphery is bent over 90° and in its inner periphery is bent over 90° in the opposite direction, whereby the free edge of one (11) bent part is bent over 180°, so that the cross section of this part (11) is U-shaped, whereby the bent over parts (11, 15) constitute sealing surfaces (12, 16) and the part of the ring between the bent parts (11, 15) has essentially parallel sealing surfaces (17, 18) on both sides.

2. Sealing means according to claim 1, **characterized** in that the outside (12) of the free shank of the U-shaped part (11) is made to constitute a sealing surface.

3. Sealing means according to claim 1 or 2, **characterized** in that the 90° bent over part (15) has a curved resilient part (20) and that there are sealing surfaces (16, 21) on both sides of the part (15).

4. Sealing means according to claim 1 or 2, **characterized** in that the 90° bent over part (15) has a relief (22), whereby heat transfer from hot gases in for example the cylinder of a combustion engine to the wall of the cylinder is limited.

Fig. 1

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3310497 (MOTOREN-WERKE MANNHEIM AG)<br>* page 8, line 11 - page 12, line 5; figures *<br>--- | 1 | F16J15/08<br>F02F11/00 |
| A | US-A-4474147 (HOOPES)<br>* column 2, line 34 - column 3, line 28; figures *<br>--- | 1 | |
| A | GB-A-2089907 (NICHOLSON)<br>* abstract; figure 3 *<br>----- | 1 | |

TECHNICAL FIELDS SEARCHED (Int. Cl.5 )

F16J
F02F

The present search report has been drawn up for all claims

| Place of search | Date of completion of the search | Examiner |
|---|---|---|
| THE HAGUE | 23 MAY 1991 | MOUTON J.M.M.P. |